# EUROPÄISCHE PATENTSCHRIFT

(11) **EP 3 546 467 B1**
(45) Veröffentlichungstag und Bekanntmachung des Hinweises auf die Patenterteilung: **12.08.2020**
(21) Anmeldenummer: 18164576.3
(22) Anmeldetag: 28.03.2018
(51) Int. Cl.: C07F 7/18

(54) **VERFAHREN ZUR HERSTELLUNG ALKOXYSILANGRUPPEN-HALTIGER ISOCYANATE**
METHOD FOR PRODUCING ALKOXYSILANE GROUP-CONTAINING ISOCYANATES
PROCÉDÉ DE PRODUCTION D'ISOCYANATES CONTENANT DES GROUPES ALCOXYSILANE

(43) Veröffentlichungstag der Anmeldung: 02.10.2019
(73) Patentinhaber: Evonik Operations GmbH, 45128 Essen (DE)
(72) Erfinder: KRECZINSKI, Manfred, 44652 Herne (DE); KOHLSTRUK, Stephan, 45966 Gladbeck (DE); SPYROU, Emmanouil, 46514 Schermbeck (DE); HOPPE, Dirk, 48301 Nottuln (DE)
(74) Vertreter: Evonik Patent Association

(56) Entgegenhaltungen:
- EP-A1- 2 455 385
- WO-A2-2007/037817
- US-A- 5 393 910
- US-A- 5 886 205
- US-B2- 9 663 539

## Beschreibung

Die Erfindung betrifft ein Verfahren zur Herstellung Alkoxysilangruppen-haltiger Isocyanate.

Alkoxysilangruppen-haltige Isocyanate sind als heterofunktionelle Bausteine vielseitig einsetzbar und können beispielsweise Anwendung in Beschichtungen, Dichtstoffen, Klebstoffen und ElastomerMaterialien finden, ohne allerdings auf diese Einsatzfelder beschränkt zu sein.

Verfahren zur Herstellung von Alkoxysilangruppen-haltigen Isocyanaten sind bekannt. So können sie beispielsweise durch Umsetzung von Alkoxysilanoalkylaminen mit Phosgen in Gegenwart tertiärer Amine erhalten werden (DE 35 44 601 C2, US 9,309,271 B2), wobei allerdings neben der Toxizität von Phosgen die Bildung von chlorhaltigen Nebenprodukten und Salzen von Nachteil ist.

Alternativ kann der Zugang zu Alkoxysilangruppen-haltigen Isocyanaten auch erschlossen werden durch Hydrosilylierung von Olefingruppen-haltigen Isocyanaten in Gegenwart von Edelmetallkatalysatoren (EP 0 709 392 B1). Nachteile sind hier in der Regel mangelnde Selektivität und hoher Katalysatorbedarf.

US 5,218,133 A beschreibt einen Weg zur Herstellung von Alkoxysilanoalkylurethanen, der die störende Bildung stöchiometrischer Salzmengen vermeidet. Dazu werden Alkoxysilanoalkylamine in Gegenwart basischer Katalysatoren, insbesondere in Gegenwart von Metallalkoxiden, mit Alkylcarbonaten umgesetzt und die Reaktionsmischung im Anschluss neutralisiert. Die erhaltenen Alkoxysilanoalkylurethane können thermisch zu Silylorganoisocyanaten gespalten werden und werden weiter in Gegenwart eines Trimerisierungskatalysators zu Isocyanuraten umgesetzt.

Alternativ kann die Deaktivierung des basischen Katalysators im Reaktionsgemisch auch mit halogenhaltigen Neutralisationsmitteln durchgeführt werden (WO 2007/037817 A2). Diese haben jedoch in der nachfolgend beschriebenen Spaltreaktion zur Herstellung der Isocyanate den Nachteil, zu stark korrosiven halogenhaltigen Stoffen und Neutralisationsprodukten zu führen, die sehr hohe Anforderungen an die Reaktormaterialien stellen und somit Investitions- und Instandhaltungskosten erhöhen.

Ein weiterer Weg zu Alkoxysilan-haltigen Isocyanaten führt über die Umsetzung von Haloalkylalkoxysilanen mit Metallcyanaten unter Ausbildung von Alkoxysilanoalkylurethanen und anschließender thermischer Spaltung der Urethane unter Freisetzung der korrespondierenden Isocyanate (US 3,598,852 A, US 3,821,218 A). Auch wenn die Bildung von Salz hier prinzipiell nachteilig ist, überwiegt doch der auf der guten Verfügbarkeit der eingesetzten Haloalkylalkoxysilane beruhende Vorteil. Vergleichsweise aufwändiger ist eine Synthese über N-Silylpropyl-N'-Acyl-Harnstoffe (DE 35 24 215 A1).

US 5,393,910 A beschreibt ein Verfahren zur thermischen Spaltung von bevorzugt gemäß US 5,218,133 A hergestellten Alkoxysilanoalkylurethanen bei hoher Temperatur in der Gasphase. Nachteil dieses Verfahrens ist die Notwendigkeit hochtemperaturbeständigen und somit kostenintensiven Spezialequipments. Zudem wird in Patenten, die sich nicht speziell auf Silanoisocyanate beziehen, berichtet, dass die erforderliche hohe Temperatur zur Reaktorverkokung führt. Dies ist von Nachteil, weil die Anlagenverfügbarkeit leidet.

Alternativ zur Urethanspaltung in der Gasphase kann die thermisch induzierte Freisetzung von Alkoxysilangruppen-haltigen Isocyanaten auch verdünnt in inerten Lösemitteln durchgeführt werden (s. US 5,886,205 A, US 6,008,396 A). Dabei wird das Alkoxysilanoalkylurethan zum inerten Lösemittel addiert und die Temperatur des Lösemittels so hoch gewählt, dass einerseits die Urethanspaltung gefördert, andererseits aber unerwünschte Nebenreaktionen möglichst vermieden werden. US 5,886,205 A offenbart für die batchweise oder kontinuierlich durchführbare Reaktion pH-Werte von weniger als 8, Temperaturen von nicht mehr als 350 °C und einen Katalysator umfassend mindestens ein Metall ausgewählt aus Sn, Sb, Fe, Co, Ni, Cu, Cr, Ti und Pb oder mindestens eine Metallverbindung umfassend diese Metalle. Nachteilig ist der im Vergleich zur Gasphasenspaltung erforderliche Aufwand zur Lösemittelaufreinigung und der unvermeidbare Lösemittelverlust.

US 9,663,539 B2 beschreibt ein Verfahren zur Herstellung von Alkoxysilanoalkylurethanen und ihrer anschließenden thermischen Spaltung mit dem Ziel, farbhelle Alkoxysilangruppen-haltige Isocyanate mit hoher Lagerstabilität zu erhalten. Offenbart wird ein Verfahren zur Herstellung von Isocyanatoorganosilanen, bei dem
a) ein Aminoorganosilan mit einem organischen Carbonatester in Gegenwart eines basischen Katalysators zu einem Silylorganocarbamat umgesetzt wird,
b) der pH-Wert des Gemisches mit einer organischen Carbonsäure auf einen pH-Wert größer oder gleich 6,0 eingestellt wird,
c) das erhaltene Gemisch bei einer Temperatur von 80- 130 °C gestrippt wird, um entstandenen Alkohol abzutrennen und um einen Carbonatester-Gehalt von weniger als ungefähr 5,0 Gew.-% einzustellen,
d) das Gemisch aus c) filtriert wird,
e) optional eine organische Carbonsäure zugegeben wird, um den pH-Wert auf größer oder gleich 6,0 einzustellen,
f) das in d) oder e) erhaltene Gemisch thermisch gespalten wird, um Isocyanatoorganosilan und entsprechende Nebenprodukte zu erhalten,
g) Isocyanatoorganosilan von den in f) erhaltenen Nebenprodukten abgetrennt und
h) in g) erhaltenes Isocyanatoorganosilan gesammelt wird.

Die Schritte a) bis c) können jeweils batchweise oder kontinuierlich durchgeführt werden. Insbesondere für den Schritt f) ist jedoch keine kontinuierliche Verfahrensführung offenbart. Nachteil des beschriebenen Verfahrens ist insbesondere die mangelnde Selektivität und somit ineffiziente Rohstoffausnutzung .

Es ist somit die Aufgabe der vorliegenden Erfindung, die vorgenannten Nachteile des Standes der Technik zu vermeiden. Insbesondere ist es Aufgabe der vorliegenden Erfindung, ein selektives, ressourcenschonendes und einfaches Verfahren zur Herstellung von Alkoxysilangruppen-haltigen Isocyanaten aus einfach verfügbaren Vorläuferverbindungen in hohen Ausbeuten bereitzustellen.

Überraschend wurde nun festgestellt, dass die vorliegende Aufgabe gelöst werden kann durch das erfindungsgemäße Verfahren zur Herstellung Alkoxysilangruppen-haltigen Isocyanats, bei dem in der Abfolge der Schritte A) bis D)
A) Haloalkylalkoxysilan mit Metallcyanat und Alkohol (und unter Freisetzung von Leichtsiedern, Feststoffen, Salzfrachten und/oder Hochsiedern) zu Alkoxysilanoalkylurethan umgesetzt,
B) Alkoxysilanurethan von Leichtsiedern, Feststoffen, Salzfrachten und/oder Hochsiedern befreit und optional aufgereinigt,
C) Nach B) erhaltenes Alkoxysilanoalkylurethan unter Freisetzung von Alkoxysilangruppen-haltigem Isocyanat und Nebenprodukt und unter Verbleib von Sumpfmaterial thermisch gespalten und
D) Alkoxysilangruppen-haltiges Isocyanat und Nebenprodukt voneinander und vom Spaltsumpfmaterial getrennt und aufgefangen wird,
bei dem die Verfahrensführung mindestens der Schritte C) bis D) kontinuierlich erfolgt.

Unter einem Verfahren zur Herstellung Alkoxysilangruppen-haltigen Isocyanats aus Haloalkylalkoxysilan, Metallcyanat und Alkohol ist vorliegend hier und im Folgenden ein Verfahren zu verstehen, bei dem aus einem oder mehreren Haloalkylalkoxysilanen und einem oder mehreren Metallcyanaten in Gegenwart von einem oder mehreren Alkoholen zunächst ein oder mehrere Alkoxysilanoalkylurethane hergestellt werden, die nachfolgend thermisch zu einem oder mehreren Alkoxysilangruppen-haltigen Isocyanaten und einem oder mehreren Nebenprodukten, insbesondere zu den als Edukt eingesetzten Alkoholen, umgesetzt werden. Bevorzugt ist das erfindungsgemäße Verfahren ein Verfahren, bei dem aus einem Haloalkylalkoxysilan, einem Metallcyanat und einem Alkohol zunächst ein Alkoxysilanoalkylurethan hergestellt wird, das nachfolgend thermisch zu einem Alkoxysilangruppen-haltigen Isocyanat und einem Nebenprodukt, insbesondere dem ursprünglich eingesetzten Alkohol, umgesetzt wird.

Kernunterschied des erfindungsgemäßen Verfahrens zu den im Stand der Technik offenbarten Verfahren ist, dass mindestens die Verfahrensschritte C) und D) kontinuierlich erfolgen. Bislang konnten nur die Schritte A) und B) kontinuierlich geführt werden, insbesondere jedoch nicht der Spaltschritt C). Somit kann das Verfahren so durchgeführt werden, dass die Schritt A) und B) diskontinuierlich und die Schritte C) und D) kontinuierlich geführt werden. Möglich ist auch, alle Schritte A) bis D) kontinuierlich zu führen. Denkbar ist auch, nur einen der Schritte A) oder B) diskontinuierlich zu führen und die Schritte C) und D) dann kontinuierlich zu führen

Bevorzugt wird dabei die kontinuierliche Verfahrensführung der Schritte C) bis D) dadurch ermöglicht, dass in Schritt C) das Sumpfmaterial ganz oder partiell aus der Spaltapparatur ausgeschleust, nachfolgend thermisch behandelt und/oder aufgereinigt und/oder in Gegenwart von Alkohol einer Nachbehandlung (Reurethanisierung) unterzogen und wieder in Schritt A), B) oder C) zugeführt wird. Dadurch, dass das Sumpfmaterial abgeführt, thermisch behandelt und/oder aufgereinigt und/oder im Sumpfmaterial vorhandene Isocyanate erneut mit Alkohol thermisch urethanisiert werden, wird der Hochsiederanteil im Sumpfmaterial erniedrigt und/oder der Wertstoffanteil erhöht. Der abgeführte, thermisch behandelte und/oder aufgereinigte und/oder reurethanisierte Strom wird in Schritt A), B) oder C) des Prozesses recycliert. Bevorzugt wird auch Ausschleusung, thermische Behandlung und/oder Aufreinigung und/oder Nachbehandlung mit Alkohol und Zuführung des Sumpfmaterials kontinuierlich geführt. Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt A), B) oder C) zugeführt. Ganz besonders bevorzugt wird das Sumpfmaterial abgeführt, thermisch behandelt, aufgereinigt und das aufgereinigte Sumpfmaterial wieder in Schritt A), B) oder C) zugeführt.

Bevorzugt ist somit ein Verfahren zur Herstellung Alkoxysilangruppen-haltigen Isocyanats, bei dem in der Abfolge der Schritte A) bis D)
A) Haloalkylalkoxysilan mit Metallcyanat und Alkohol (und unter Freisetzung von Leichtsiedern, Feststoffen, Salzfrachten und/oder Hochsiedern) zu Alkoxysilanoalkylurethan umgesetzt,
B) Alkoxysilanoalkylurethan von Leichtsiedern, Feststoffen, Salzfrachten und/oder Hochsiedern befreit und optional aufgereinigt,
C) Nach B) erhaltenes Alkoxysilanoalkylurethan unter Freisetzung von Alkoxysilangruppen-haltigem Isocyanat und Nebenprodukt und unter Verbleib von Sumpfmaterial thermisch gespalten wird, während
   i) das Sumpfmaterial ganz oder partiell aus der Spaltapparatur ausgeschleust,
   ii) thermisch behandelt und/oder aufgereinigt und/oder in Gegenwart von Alkohol einer Nachbehandlung/Reurethanisierung unterzogen und
   iii) das entnommene Material nach thermischer Behandlung und/oder Aufreinigung und/oder Nachbehandlung/Reurethanisierung in Schritt A), B) oder C) erneut zugeführt wird, und
D) Alkoxysilangruppen-haltiges Isocyanat und Nebenprodukt voneinander und vom Spaltsumpfmaterial getrennt und aufgefangen wird.

Es wurde überraschend gefunden, dass es bei der kontinuierlichen Herstellung von Alkoxysilangruppen-haltigen Isocyanaten aus den korrespondierenden Haloalkylalkoxysilanen von Vorteil ist, die Alkoxysilanoalkylurethane nach ihrer Synthese durch Umsetzung von Haloalkylalkoxysilanen mit Metallcyanaten und Alkoholen von Leichtsiedern (insbesondere von Alkohol) sowie möglichen Feststoffen, Salzfrachten und Hochsiedern zu befreien, die so gereinigten Alkoxysilanoalkylurethane unter Freisetzung des gewünschten Alkoxysilangruppen-haltigen Isocyanats thermisch zu spalten, einen Teil des Spaltsumpfmaterials aus der Spaltapparatur bevorzugt kontinuierlich auszuschleusen und einer thermischen Nachbehandlung zu unterziehen, so dass der Hochsiederanteil erniedrigt sowie der Wertstoffanteil der Stoffmischung erhöht wird, hieraus die Hochsiederkomponenten abzutrennen sowie die Wertstoffkomponenten in den Prozess zu recyclieren. Es hat sich herausgestellt, dass auf diese Weise zum einen eine vergleichsweise niedrige stationäre Konzentration an Hochsiederkomponenten über die gesamte Sequenz Urethan-Synthese, Urethanreinigung und Urethanspaltung realisiert wird, so dass Ablagerungen, die insbesondere durch die von Natur aus höherviskosen Hochsiederkomponenten begünstigt werden, vermieden werden können und auch langfristig eine gute Anlagenverfügbarkeit und eine gute Verfahrensausbeute gewährleistet sind. Zum anderen hat die der thermischen Spaltreaktion nachgeschaltete thermische Nachbehandlung - z. B. durch Reaktivdestillation - den Vorteil, dass im Vergleich zur Vorgehensweise ohne Nachbehandlung überraschend eine zusätzlich gesteigerte Ausbeute erzielt werden kann und auf diese Weise eine effizientere Rohstoffnutzung gefördert wird.

Bevorzugt hat das in Schritt A) eingesetzte Haloalkylalkoxysilan die Formel (1)

R³m (OR²)₃₋ₘSi-R¹-X (1)

wobei R³, R² und R¹ jeweils unabhängig voneinander ein linearer, verzweigter oder cyclischer Kohlenwasserstoffrest mit 1-6 C-Atomen, m gleich 0 - 2 und X = F, Cl, Br oder I ist. Bevorzugt ist m gleich 0 und R¹ gleich Methyl oder Propyl, R² gleich Methyl oder Ethyl und X = Cl.

Bevorzugt ist das Metallcyanat ausgewählt aus der Gruppe der Alkali- oder Erdalkalicyanate. Weiter bevorzugt sind Natrium-, Kalium-, Calcium- und Bariumcyanat.

Bei dem eingesetzten Alkohol handelt es sich bevorzugt um einen Alkohol der Formel R²OH, in dem R² ein linearer, verzweigter oder cyclischer Kohlenwasserstoffrest mit 1-6 C-Atomen ist.

Bevorzugt wird die Umsetzung nicht nur in Gegenwart von Alkohol, sondern auch in Gegenwart eines aprotischen Lösemittels durchgeführt. Bevorzugte aprotische Lösemittel sind Dimethylformamid, Dimethylsulfoxid, Dimethylcarbonat und Gemische hiervon.

Ein Katalysator muss nicht verwendet werden, kann jedoch Anwendung finden. Bevorzugt wird ein Katalysator eingesetzt. Weiter bevorzugt ist der Katalysator ausgewählt aus Kronenethern, insbesondere [18]Krone-6, und Kryptanden.

Bevorzugt ist das Molverhältnis von Haloalkylalkoysilan und Metallcyanat kleiner 1 : 4, vorzugsweise kleiner 1 : 2. Das Molverhältnis von Haloalkylalkoxysilan zu Alkohol ist bevorzugt kleiner 1 : 5, bevorzugt kleiner 1 : 3. Bevorzugt wird die Umsetzung über eine Zeit von 2 - 20 h, vorzugsweise 4 - 12 h, bei einer Temperatur von 20 - 150 °C, vorzugsweise 30 - 140 °C durchgeführt. Bevorzugt wird die Reaktion bei Atmosphärendruck durchgeführt.

Die Umsetzung des Haloalkylalkoxysilans in Reaktionsstufe A) wird bevorzugt so durchgeführt, dass Haloalkylalkoxysilan der Formel (1), optional in Zumischung von insbesondere aus dem Sumpfmaterial der nachfolgenden Spaltreaktion stammenden Alkoxysilanoalkylurethanen der Formel (2),

R³m (OR²)₃₋ₘSi-R¹-NH-(C=O)-OR⁴ (2),

wobei R⁴, R³, R² und R¹ unabhängig voneinander ein linearer, verzweigter oder cyclischer Kohlenwasserstoffrest mit 1 - 6 C-Atomen, und m gleich 0 - 2 ist,
in einem aprotischen Lösemittel und in Gegenwart eines Kronenethers oder Kryptanden als Katalysator mit einem Metallcyanat und einem Alkohol der Formel R²OH über 2 - 20 h, vorzugsweise 4 - 12 h, bei 20 - 150 °C, vorzugsweise 30 - 140 °C, zur Reaktion gebracht wird, wobei das Molverhältnis von Haloalkylalkoxysilan zu Metallcyanat kleiner 1 : 4, vorzugsweise kleiner 1 : 2 und das Molverhältnis von Haloalkylalkoxysilan zu Alkohol kleiner 1 : 5, bevorzugt kleiner 1 : 3 ist.

Die optionale Zumischung des Alkoxysilanoalkylurethans zur Reaktionsmischung kann vor dem Start der Umsetzung erfolgen, aber auch im Verlauf der Umsetzung, punktuell oder kontinuierlich.

Die Umsetzung kann im Batchreaktor, in einer kontinuierlich betriebenen Kesselkaskade oder einem Rohreaktor durchgeführt werden. Bevorzugt wird die Reaktion in einer kontinuierlich betriebenen Kesselkaskade oder einem Rohreaktor durchgeführt.

In Schritt B) werden Leichtsieder, Feststoffe, Salzfrachten und/oder Hochsieder entfernt und optional das Alkoxysilanoalkylurethan aufgereinigt.

Bevorzugt wird die Entfernung der Leichtsieder, Feststoffe, Salzfrachten und/oder Hochsieder in drei bis vier separaten Teilschritten durchgeführt. Weiter bevorzugt können die Leichtsieder destillativ, die Feststoffe und/oder Salzfrachten über Filtration oder Zentrifugation, und die Hochsieder über Dünnschichtverdampfung abgetrennt werden. Dabei wird vorzugsweise zunächst der Produktstrom aus A) zur Abtrennung von Feststoffen filtriert oder zentrifugiert, anschließend die Leichtsieder destillativ abgetrennt, dann optional die Hochsieder über Dünnschichtverdampfung abgetrennt und schließlich erhaltenes Alkoxysilanoalkylurethan ggf. zusammen mit anwesendem Alkoxysilan-haltigem Isocyanat über Destillation aufgereinigt und ggf. noch anwesende Lösemittelreste abgetrennt.

Die Filtration oder Zentrifugation wird bevorzugt bei Temperaturen von 30 - 90 °C, weiter bevorzugt bei 50 - 70 °C, ganz besonders bevorzugt bei 60 °C, durchgeführt.

Die Filtration kann über Membrane, Adsorber oder Fasermatten erfolgen, durch Vakuum- oder Druckfiltration, in einem Temperaturbereich von 30 - 90 °C, vorzugsweise 50 - 70 °C, besonders bevorzugt bei 60 °C. Alternativ zur Filtration kann die Trennung von Fest- und Flüssigphase auch mit Hilfe einer Zentrifuge durchgeführt werden.

Die destillative Abtrennung der Leichtsieder, bestehend bevorzugt aus Lösemittel und überschüssigem Alkohol, wird bevorzugt bei Temperaturen von 40 - 200 °C, weiter bevorzugt bei 50 - 180 °C, ganz besonders bevorzugt bei 55 - 75 °C, bei vermindertem Druck durchgeführt.

Die Leichtsieder können bevorzugt bei 40 - 200 °C, weiter bevorzugt bei 50- 180 °C, besonders bevorzugt bei 55 - 75 °C, bei 20 - 800 mbar (2-80 kPa), bevorzugt 40 - 600 mbar (4-60 kPa), destillativ abgetrennt werden.

Die Abtrennung kann ein- oder mehrstufig durchgeführt werden. Dies kann prinzipiell im Batch mit einer aufgesetzten Destillationskolonne erfolgen, vorzugsweise erfolgt dies jedoch über Abflashen oder mittels Dünnschichtverdampfung.

Durch Filtration oder Zentrifugation und anschließende Destillation nicht hinreichend entfernte Verunreinigungen können durch eine weitere optionale Aufreinigung entfernt werden. Dazu wird das Gemisch bei einem Druck von 1 - 30 mbar (0,1-3 kPa), vorzugsweise 2 - 20 mbar (0,2-2 kPa), und bei einer Temperatur von 80 - 220 °C, bevorzugt 100 - 200 °C über einen Kurzweg- oder Dünnschichtverdampfer gefahren, so dass Destillat und Ablauf in einem Verhältnis von größer 80 Gew.-% zu 20 Gew.-%, vorzugsweise 85 Gew.-% zu 15 Gew.-% anfallen.

Die optionale Dünnschichtverdampfung des erhaltenen Filtrats bzw. Permeats wird bevorzugt bei einem Druck von 1 - 30 mbar (0,1-3 kPa), vorzugsweise 2 - 20 mbar (0,2-2 kPa) und einem Schnittverhältnis Destillat/Rückstand von größer 80 Gew.-% zu 20 Gew.-%, vorzugsweise größer 85 Gew.-% zu 15 Gew.-% durchgeführt. Dabei kann der Rückstand bevorzugt in die Urethansynthese A) oder den Aufreinigungsschritt B) rückgeführt werden. Bevorzugt wird der Rückstand in die Urethansynthese A) oder in den Filtrations-/Zentrifugationsschritt B) i) geführt.

Die destillative Aufreinigung des Produktstroms wird bevorzugt so geführt, dass mögliche Lösemittelreste über Kopf und Alkoxysilanoalkylurethan sowie ggf. anwesendes Alkoxysilangruppen-haltiges Isocyanat am Seitenabzug abgezogen wird. Bevorzugt wird dazu eine Destillationskolonne eingesetzt.

In der thermischen Spaltung C) des aus dem Seitenabzugstrom entnommenen Alkoxysilanoalkylurethans entsteht Alkoxysilangruppen-haltiges Isocyanat und Nebenprodukt, bevorzugt Alkohol. Bevorzugt wird die thermische Spaltung ohne Lösemittelzugabe durchgeführt.

Die thermische Spaltung in Schritt C) wird bevorzugt in Gegenwart eines Katalysators kontinuierlich und lösemittelfrei bei einer Temperatur von 150 bis 280 °C, vorzugsweise 165 bis 265 °C, und unter einem Druck von 0,5 - 200 mbar (0,05-20 kPa), vorzugsweise 1,0 - 100 mbar (0,1-10 kPa), durchgeführt. Die Katalysatorkonzentration beträgt bevorzugt 0,5 - 100 ppm, vorzugsweise 1 - 60 ppm, besonders bevorzugt 2-30 ppm.

Bei der thermischen Spaltung wird bevorzugt ein Teil des Reaktionsgemisches, bevorzugt 1 bis 90 Gew.-% bezogen auf den Feed, vorzugsweise 5 bis 60 Gew.-% bezogen auf den Feed, ständig aus dem Sumpf ausgeschleust. Entsprechend werden bevorzugt entsprechende Mengen an Sumpfmaterial aus der Spaltapparatur ausgeschleust.

Die thermische Spaltung erfolgt dabei bevorzugt partiell, d.h. der Umsatz von Produkt aus Schritt B)/Seitenabzugstrom zu Alkoxysilangruppen-haltigem Isocyanat wird frei gewählt und liegt üblicherweise in einem Bereich von 10 - 95 Gew.-%, vorzugsweise 20 - 85 Gew.-% der zugeführten Menge (Feed). Bevorzugt wird ein Teil des Reaktionsgemisches, das neben nicht umgesetzten Urethan der Formel (2) hochsiedende Nebenprodukte und andere wiederverwertbare und unverwertbare Nebenprodukte enthält, kontinuierlich aus dem Sumpf ausgeschleust. Die Menge der Ausschleusung richtet sich u.a. nach dem gewünschten Umsatz und der gewünschten Kapazität der Spaltreaktion und kann leicht experimentell ermittelt werden. Sie beträgt üblicherweise 1 bis 90 Gew.-%, vorzugsweise 5 bis 60 Gew.-% bezogen auf den Feed.

Als Katalysator zur chemischen Spaltung der Alkoxysilangruppen-haltigen Urethane finden zum Beispiel die Urethanbildung katalysierende anorganische und organische Verbindungen Verwendung. Vorzugsweise werden Chloride des Zinks oder Zinns sowie Zink-, Mangan-, Eisen- oder Cobaltoxide eingesetzt, wobei der Katalysator dem im wesentlichen Urethan enthaltenden Stoffstrom aus dem Reinigungsschritt B), insbesondere dem Stoffstrom aus Schritt B) iv) und ggf. weiteren recyclierten Strömen vor ihrer Zuführung in die Spaltung als 0,01 -25 Gew.-%ige, vorzugsweise 0,05 - 10 Gew.-%ige Lösung oder Suspension in Alkohol, in einer Menge von 0,5 - 100 ppm, vorzugsweise 1 - 60 ppm, besonders bevorzugt 2 - 30 ppm zudosiert wird. Grundsätzlich, aber nicht bevorzugt, kann die Urethanspaltung auch ohne Katalysatorzusatz durchgeführt werden. Überraschend hat sich gezeigt, dass eine niedrige Katalysatorkonzentration die Selektivität der im Spaltsumpf stattfindenden chemischen Umsetzungen zugunsten der gewünschten thermischen Spaltung unter Freisetzung des Zielprodukts fördert, während sowohl zu hohe Katalysatorkonzentrationen als auch die Abwesenheit des Spaltkatalysators zu einer erhöhten Nebenproduktbildung führen. Die optimale Katalysatorkonzentration kann auf Grundlage dieser Beobachtung leicht experimentell ermittelt werden.

Als Spaltvorrichtungen eignen sich bevorzugt zylinderförmige Spaltreaktoren, wie z. B. Röhrenöfen oder vorzugsweise Verdampfer, beispielsweise Fallfilm-, Dünnschicht- oder Bulkverdampfer wie z. B. Robertverdampfer, Herbertverdampfer, Caddle-Typ-Verdampfer, Oskarverdampfer und Heizkerzenverdampfer.

Prinzipiell geht es darum, die mittlere Verweilzeit der Isocyanatgruppen, die bei der Deblockierung des Alkohols zwangsläufig freigesetzt werden, in der Spaltzone möglichst gering zu halten und so unerwünschte Nebenreaktionen auf ein Minimum zu beschränken. Bevorzugt wird die Spaltung in einer kombinierten Spalt- und Rektifizierkolonne durchgeführt, die für die Energiezufuhr im Sumpf mit einem Fallfilmverdampfer, im oberen Teil mit einer Einrichtung zum Abzug von Produkt bzw. Rohprodukt und am Kopf mit einem Kondensator für den Rückfluss und den Abzug von Alkohol ausgestattet ist. Optional können im unteren Drittel noch Einrichtungen zum zusätzlichen Energieeintrag installiert sein.

Die bei der thermischen Spaltung gebildeten Spaltprodukte, die sich vor allem aus Alkohol und Alkoxysilangruppen-haltigem Isocyanat zusammensetzen, können bevorzugt durch Rektifikation bei Temperaturen von 150 - 280 °C, vorzugsweise 165 -265 °C, und einem Druck von 0,5 - 200 mbar (0,05-20 kPa), vorzugsweise 1 - 100 mbar (0,1-10 kPa), in Alkohol und Alkoxysilangruppen-haltiges Isocyanat getrennt werden, wobei das Isocyanat u.a. ggf. noch Anteile am zugrundeliegenden Urethan enthält. Diese Trennung kann beispielsweise in der Spaltkolonne der obengenannten kombinierten Spalt- und Rektifizierkolonne durchgeführt werden.

Das Hochsieder enthaltende Sumpfmaterial der Spaltapparatur kann nach Ausschleusung bevorzugt thermisch behandelt und/oder aufgereinigt und/oder in Gegenwart von Alkohol einer Nachbehandlung unterzogen werden und wird dann bevorzugt in Schritt A), B) oder C) erneut zugeführt. Damit kann der Hochsiederanteil verringert sowie der Wertstoffanteil der Stoffmischung erhöht werden. Besonders bevorzugt wird das Sumpfmaterial abgeführt, aufgereinigt und im Sumpfmaterial vorhandene Isocyanate erneut mit Alkohol behandelt und das aufgereinigte Sumpfmaterial wieder in Schritt A), B) oder C) zugeführt. Ganz besonders bevorzugt wird das Sumpfmaterial abgeführt, thermisch behandelt, aufgereinigt und das aufgereinigte Sumpfmaterial wieder in Schritt A), B) oder C) zugeführt.

Besonders bevorzugt wird das thermisch behandelte und/oder aufgereinigte und/oder mit Alkohol nachbehandelte Sumpfmaterial in Schritt B) oder C) wieder zugeführt, da dann Ablagerungen in der Urethansynthese vermieden werden können und die Ausbeuten höher sind.

Die thermische Nachbehandlung erfolgt bevorzugt bei einer Temperatur von 150 - 250 °C über einen Zeitraum von 0,2 bis 4 h, weiter bevorzugt bei 190 - 250 °C über einen Zeitraum von 0,5 - 1,5 h bei Normaldruck.

Der Aufreinigungsschritt erfolgt bevorzugt destillativ. Dabei wird bevorzugt das ausgeschleuste Sumpfmaterial bei vermindertem Druck und einer Temperatur von 150 - 250 °C so destilliert, dass im Sumpf entstandenes Alkoxysilanoalkylisocyanat und/oder Alkoxysilanoalkylurethan von den Hochsiedern abgetrennt wird. Dies kann z. B. über Dünnschichtverdampfung erfolgen. Das erhaltene Destillat kann Schritt A), B) oder C) des Verfahrens zugeführt werden. Bevorzugt wird das erhaltene Destillat der Dünnschichtverdampfung A), B) iv) oder der Spaltung C) zugeführt.

Die Sumpfausschleusung aus der Spaltstufe C) enthält neben nicht umgesetzten Urethan zudem hochsiedende Nebenprodukte und andere wiederverwertbare und unverwertbare Nebenprodukte. Der wiederverwertbare Anteil, d.h. der Wertstoffanteil der Stoffmischung - und dadurch die Gesamtausbeute des Verfahrens - kann durch eine gezielte thermische Nachbehandlung in Kombination mit einer destillativen Aufreinigung, insbesondere durch Reaktivdestillation, des Materials erhöht werden. Das Material wird in einen Wertstoff- und eine Abfallstrom aufgetrennt, wobei der an Hochsiedern reiche Abfallstrom aus dem Prozess ausgeschleust und verworfen bzw. recycliert wird. Bevorzugt ist die Aufarbeitung des Sumpfmaterials über thermische Behandlung und Aufreinigung eine Reaktivdestillation.

Das ausgeschleuste Sumpfmaterial umfassend Alkoxysilanoalkylisocyanat und/oder Alkoxysilanoalkylurethan kann weiter bevorzugt mit oder ohne vorhergehenden Aufreinigungsschritt einer ggf. weiteren Nachbehandlung unterzogen werden, um den Wertstoffanteil der Stoffmischung zu erhöhen. Dazu wird das ggf. destillierte Sumpfmaterial in Gegenwart eines Alkohols der Formel R²OH mit R² = linearer, verzweigter oder cyclischer Kohlenwasserstoffrest mit 1 - 6 C-Atomen bei 25 - 100°C in Gegenwart oder Abwesenheit eines Katalysators umgesetzt. Als Katalysatoren kommen alle Kontakte in Frage, die die NCO/OH-Reaktion fördern, z. B. Zinnoctoat, Dibutylzinnlaurat, Zinndichlorid, Zinkdichlorid oder Triethylamin. Das Molverhältnis von NCO-Gruppen und OH-Gruppen beträgt bevorzugt bis zu 1 : 100, vorzugsweise bis zu 1 : 60 und besonders bevorzugt bis zu 1 : 30. Die Reaktion kann in einem Batchreaktor, einer Kaskade oder auch in einem Rohrreaktor in Abwesenheit oder Gegenwart eines Katalysators durchgeführt werden. Bevorzugt wird die Reaktion in einer Kaskade oder in einem Rohrreaktor durchgeführt. Dabei werden entstandene Alkoxysilanoalkylisocyanate zu den entsprechenden Urethanen umgesetzt ("Reurethanisierung"). Der erhaltene Produktstrom kann bevorzugt der Urethansynthese A) und/oder dem Aufreinigungsschritt B) zugeführt werden. Besonders bevorzugt kann der erhaltene Produktstrom der Urethansynthese A), dem Destillationsschritt B) ii) und/oder der destillativen Aufreinigung B) iv) zugeführt werden. Überschüssiger Alkohol wird dabei vorher bevorzugt ganz oder teilweise abgetrennt.

Die Schritte thermische Nachbehandlung und Auftrennung in Wertstoff- und Abfallstrom und Reurethanisierung können nacheinander oder parallel durchgeführt werden. So eignet sich für die thermische Nachbehandlung beispielsweise ein Batchreaktor, wobei die Auftrennung der Komponenten im Anschluss in einer Destillationskolonne oder mit Hilfe eines Fallfilm-, Kurzweg- oder Dünnschichtverdampfers erfolgen kann, beispielsweise durch Rückführung in die optionale Hochsiederabtrennung B iii). Weniger bevorzugt kann die Trennoperation auch durch Extraktion erfolgen. Alternativ können auch die Schritte in einem Fallfilm-, Dünnschicht- oder Kurzwegverdampfer erfolgen und es können auch mehrere hintereinander- oder parallel geschaltete Verdampfer zum Einsatz kommen.

Die thermische Nachbehandlung kann in Gegenwart oder Abwesenheit typischer Urethanisierungskatalysatoren erfolgen. Es kann auch vollständig auf die thermische Nachbehandlung verzichtet werden, man verschenkt durch diese Maßnahme jedoch Ausbeutepotenzial.

Bei gegebener Kapazität sind für eine möglichst optimale Erhöhung des Wertstoffanteils u.a. die Parameter Verweilzeit und Temperatur der thermischen Nachbehandlung entscheidend, deren Optimum von Dimensionierung und Grundaufbau der verfahrenstechnischen Konfiguration abhängen und sich vom Fachmann leicht experimentell ermitteln lassen.

In einer besonders bevorzugten erfindungsgemäßen Variante wird die Sumpfausschleusung aus der Spaltstufe C) einer Dünnschichtverdampfung bei einer Temperatur von 150 - 250 °C, vorzugsweise 165 - 235 °C, und einem Druck von 1 - 40 mbar (0,1-4 kPa), bevorzugt 2 - 20 mbar (0,2-2 kPa) unterzogen, wobei das die Wertstoffe enthaltende Destillat in den Prozess recycliert wird und der im Wesentlichen Hochsieder enthaltende Ablauf der Dünnschichtverdampfung aus dem Prozess ausgeschleust wird.

In Schritt D) wird Alkoxysilangruppen-haltiges Isocyanat und Nebenprodukt, bevorzugt Alkohol, vom Sumpfmaterial getrennt und aufgefangen. Weiter bevorzugt wird Alkoxysilangruppen-haltiges Isocyanat und Nebenprodukt voneinander getrennt, bevorzugt durch Rektifikation.

Weiter bevorzugt wird das durch Rektifikation erhaltene Isocyanat durch Destillation zusätzlich gereinigt und isoliert ("Reinisocyanat").

Das vorzugsweise durch Rektifikation erhaltene Alkoxysilangruppen enthaltende Isocyanat kann optional durch Destillation bei einer Temperatur von 80 - 220 °C, vorzugsweise 100 -200 °C und unter einem Druck von 0,5 - 200 mbar (0,05-20 kPa), 1 - 100 mbar (0,1-10 kPa), weiter aufgereinigt und als hochreines Produkt isoliert werden. Auch hierbei kann bevorzugt ein Teil des Destillationssumpfes kontinuierlich ausgeschleust und mit der augeschleusten Sumpfmaterial der Spaltung C) kombiniert werden.

Die nach dem Verfahren herstellbaren Isocyanate haben bevorzugt die Formel (3)

R³ₘ (OR²)₃₋ₘSi-R¹-NCO (3)

wobei R³, R² und R¹ unabhängig voneinander gleiche oder verschiedene Kohlenwasserstoffreste mit 1 - 6 C-Atomen bedeuten, wobei diese verzweigt oder cyclisch sein können, oder auch cyclisch ineinander übergehen können, und m gleich 0 - 2 bedeutet. Bevorzugt ist m = 0. R¹ ist bevorzugt Propyl. R² ist bevorzugt Methyl oder Ethyl. Ganz besonders bevorzugt sind Verbindungen mit m gleich 0 und R¹ gleich Methyl oder Propyl, und R² gleich Methyl oder Ethyl.

Ganz besonders geeignet ist das erfindungsgemäße Verfahren zur Herstellung von Isocyanatopropyltrimethoxysilan und Isocyanatopropyltriethoxysilan.

Vorteile des erfindungsgemäßen Verfahrens sind insbesondere, dass Alkoxysilangruppen-haltige Isocyanate bei hoher Anlagenverfügbarkeit im kontinuierlichen Betrieb mit hohen Ausbeuten hergestellt werden können. Vorteilhaft beim erfindungsgemäßen Mehrstufenverfahren ist insbesondere die Tatsache, dass bei Einsatz von Alkoxysilanoalkylaminen der Formel (1) als Ausgangsmaterial für die kontinuierliche Herstellung von Alkoxysilangruppen-haltigen Isocyanaten Ablagerungen, die insbesondere durch die von Natur aus höherviskosen Hochsiederkomponenten begünstigt werden, weitgehend vermieden werden können und auch langfristig eine gute Anlagenverfügbarkeit und eine gute Verfahrensausbeute gewährleistet ist. Weiterhin ist es ein Vorteil des erfindungsgemäßen Mehrstufenverfahrens, dass es erlaubt, die Verfahrensausbeute aufgrund der nachgeschalteten thermischen Nachbehandlung - z. B. durch Reaktivdestillation - zusätzlich zu steigern und auf diese Weise eine effizientere Rohstoffnutzung fördert.

Die oben beschriebene optionale Sequenz aus thermischer Nachbehandlung - z. B. durch Reaktivdestillation - der Sumpfausschleusung, Trennung in Wert- und Abfallstoffe, Urethanisierung der Wertstoffe und Rückführung des urethanisierten Wertstoffstroms in den Prozess, kann grundsätzlich auch in der folgenden Reihenfolge durchgeführt werden: Urethanisierung der Sumpfausschleusung, thermische Nachbehandlung, Trennung in Wert- und Abfallstoffe und Rückführung in den Prozess.

Mit dem erfindungsgemäßen mehrstufigen Verfahren zur kontinuierlichen Herstellung von Alkoxysilangruppen enthaltenden Isocyanaten unter Rückführung und Ausschleusung der Nebenprodukte kann für einen langen Zeitraum ein mit hoher Selektivität störungsfrei laufender Prozess gewährleistet werden. Das erfindungsgemäße Verfahren eignet sich zur Herstellung von Alkoxysilangruppen enthaltenden Isocyanaten mit 1 - 16 C-Atomen zwischen dem Si-Atom und der Isocyanatgruppe, insbesondere aber zur Herstellung von Isocyanatopropyltrimethoxysilan und Isocyanatopropyltriethoxysilan.

Die hergestellten Alkoxysilangruppen enthaltenden Isocyanate eignen sich für die Anwendung in Beschichtungen auf unterschiedlichen Substraten, Dichtstoffen, Klebstoffen und Elastomermaterialien - oder auch zur gezielten Modifizierung von Harzen oder diskreten Molekülen - ohne allerdings auf diese Einsatzfelder beschränkt zu sein.

Die Erfindung wird durch folgende Beispiele näher erläutert:

### Beispiel 1: Herstellung von 3-(Trimethoxysilyl)propylisocyanat - Reurethanisierung der Sumpfausschleusung und Rückführung in Urethanreinigung

Eine Lösung von 14,5 kg Chlorpropyltrimethoxysilan und 6,0 kg Kaliumcyanat sowie 5 Liter Methanol in Dimethylformamid wurde mit 20 g [18]Krone-6 versetzt und unter Normaldruck 9 h unter Rückfluss gerührt. Das angefallene Salz wurde abfiltriert und das Lösemittel sowie überschüssiges Methanol durch Abflashen weitgehend entfernt. Der Rückstand wurde einer fraktionierte Destillation bei 2 mbar Kopfdruck unterworfen. Das Alkoxysilanoalkylurethan wurde am Seitenabzug abgenommen und kontinuierlich in die Wälzung der Spalt- und Rektifizierkolonne gefahren, wobei die Deblockierungsreaktion bei einer Temperatur von 192 °C und einem Sumpfdruck von 53 mbar (5,3 kPa) in Gegenwart einer stationären Konzentration an Zinndichlorid von 55 ppm durchgeführt wurde. Die Spaltgase IPMS und Methanol wurden in zwei hintereinanderliegenden Kondensatoren auskondensiert, wobei das als Kopfprodukt anfallende Methanol nach weiterer Destillation wieder als Rohstoff eingesetzt werden kann, und das IPMS (3-(Trimethoxysilyl)propylisocyanat) mit einer Reinheit von > 98 % in einer Menge von 11,7 kg/h am Seitenabzug entnommen wurde, was einer kont. Ausbeute von 77 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust, abgekühlt, mit Methanol zusammengeführt und der kombinierte Strom (8,0 kg/h) in einem Rohreaktor bei 65 °C bis zur vollständigen Urethanisierung aller NCO-Gruppen umgesetzt. Der Reurethanisatstrom wurde in die Lösemittelabtrennung recycliert.

### Beispiel 2: Herstellung von 3-(Trimethoxysilyl)propylisocyanat - thermische Nachbehandlung und Trennung der Sumpfausschleusung und Rückführung in die Urethanspaltung.

Eine Lösung von 15,8 kg Chlorpropyltrimethoxysilan und 6,5 kg Kaliumcyanat sowie 5,5 Liter Methanol in Dimethylformamid wurde mit 10 g [18]Krone-6 versetzt und unter Normaldruck 9 h unter Rückfluss gerührt. Das angefallene Salz wurde abfiltriert und das Lösemittel sowie überschüssiges Methanol durch Abflashen weitgehend entfernt. Der Rückstand wurde einer fraktionierte Destillation bei 2 mbar Kopfdruck unterworfen. Das Alkoxysilanoalkylurethan wurde am Seitenabzug abgenommen und kontinuierlich in die Wälzung der Spalt- und Rektifizierkolonne gefahren, wobei die Deblockierungsreaktion bei einer Temperatur von 193 °C und einem Sumpfdruck von 54 mbar (5,4 kPa) in Gegenwart einer stationären Konzentration an Zinndichlorid von 28 ppm durchgeführt wurde. Die Spaltgase IPMS (3-(Trimethoxysilyl)propylisocyanat) und Methanol wurden in zwei hintereinanderliegenden Kondensatoren, die auf unterschiedlichen Temperaturniveaus betrieben wurden auskondensiert, wobei das als Kopfprodukt anfallende Methanol nach weiterer Destillation wieder als Rohstoff eingesetzt werden kann, und das IPMS (3-(Trimethoxysilyl)propylisocyanat) mit einer Reinheit von > 98% in einer Menge von 13,1 kg/h am Seitenabzug entnommen wurde, was einer kont. Ausbeute von 79 % entspricht. Zur Aufrechterhaltung der Massenbilanz innerhalb der Spalt- und Rektifizierkolonne, Vermeidung von Belegungen und ggf. Verstopfungen der Spaltapparatur, und zur Regenerierung von Wertstoffen wurde kontinuierlich ein Teilstrom aus dem Wälzkreislauf ausgeschleust, bei 220 °C mit einer Verweilzeit von 55 min thermisch nachbehandelt und anschließend 5 mbar (0,5kPa) über einen Dünnschichtverdampfer gefahren. Der Destillatstrom wurde in den Wälzkreislauf recycliert.

### Vergleichsbeispiel : Diskont. Herstellung von Isocyantopropyltrimethoxysilan - Deblockierung im Batch

Eine Lösung von 15,0 kg Chlorpropyltrimethoxysilan und 7,34 kg Kaliumcyanat sowie 5 Liter Methanol in Dimethylformamid wurde mit 22 g [18]Krone-6 versetzt und unter Normaldruck 9 h unter Rückfluss gerührt. Das angefallene Salz wurde abfiltriert und das Lösemittel sowie überschüssiges Methanol durch Abflashen weitgehend entfernt. Der Rückstand wurde einer fraktionierte Destillation bei 2 mbar (0.2 kPa) Kopfdruck unterworfen und auf diese Weise 15,1 kg Urethan erhalten.

378 g des Urethans wurden in einem 3l-Rundkolben mit Destillationsaufsatz, Rührer und Thermometer in Gegenwart von 105 ppm Zinndichlorid und einem Druck von 50 mbar auf eine Temperatur von 192 °C erhitzt. Die entstehenden Spaltgase wurden destillativ getrennt und auskondensiert. Nach 6,5 h wurde der Versuch abgebrochen, nachdem in der Destillation kein Produktstrom mehr anfiel. Insgesamt wurden 222,3 g IPMS mit einer Reinheit von 97,4 % erhalten (ca. 66 % Ausbeute), im Rundkolben blieben 106,9 g Schwersieder zurück.

## Patentansprüche

1. Verfahren zur Herstellung Alkoxysilangruppen-haltigen Isocyanats, bei dem in der Abfolge der Schritte A) bis D)
A) Haloalkylalkoxysilan mit Metallcyanat und Alkohol zu Alkoxysilanoalkylurethan umgesetzt,
B) Alkoxysilanoalkylurethan von Leichtsiedern, Feststoffen, Salzfrachten und/oder Hochsiedern befreit und optional aufgereinigt,
C) nach B) erhaltenes Alkoxysilanoalkylurethan unter Freisetzung von Alkoxysilangruppen-haltigem Isocyanat und Nebenprodukt und unter Verbleib von Sumpfmaterial thermisch gespalten und
D) Alkoxysilangruppen-haltiges Isocyanat und Nebenprodukt voneinander und vom Spaltsumpfmaterial getrennt und aufgefangen wird,
**dadurch gekennzeichnet, dass**
die Verfahrensführung mindestens der Schritte C) bis D) kontinuierlich erfolgt.

2. Verfahren nach Anspruch 1, bei dem in Schritt
C) nach B) erhaltenes gereinigtes Alkoxysilanoalkylurethan unter Freisetzung von Alkoxysilangruppen-haltigem Isocyanat und Nebenprodukt und unter Verbleib von Sumpfmaterial thermisch gespalten wird, während
i) das Sumpfmaterial ganz oder partiell aus der Spaltapparatur ausgeschleust,
ii) thermisch behandelt und/oder aufgereinigt und/oder in Gegenwart von Alkohol einer Nachbehandlung unterzogen und
iii) das entnommene Material nach thermischer Behandlung und/oder Aufreinigung und/oder Nachbehandlung in A), B) oder C) erneut zugeführt wird.

3. Verfahren nach einem der vorhergehenden Ansprüche,
**dadurch gekennzeichnet, dass**
das Haloalkylalkoxysilan die Formel (1)
R³ₘ (OR²)₃₋ₘSi-R¹-X (1)
aufweist, wobei
- R³, R² und R¹ jeweils unabhängig voneinander ein linearer, verzweigter oder cyclischer Kohlenwasserstoffrest mit 1 - 6 C-Atomen,
- m gleich 0 - 2 und
- X = F, Cl, Br oder l ist.

4. Verfahren nach einem der vorhergehenden Ansprüche,
**dadurch gekennzeichnet, dass**
das eingesetzte Metallcyanat ein Alkali- oder Erdalkalicyanat ist.

5. Verfahren nach einem der vorhergehenden Ansprüche,
**dadurch gekennzeichnet, dass**
die Reaktion in Gegenwart eines aprotischen Lösemittels durchgeführt wird.

6. Verfahren nach einem der vorhergehenden Ansprüche,
**dadurch gekennzeichnet dass**,
ein Katalysator ausgewählt aus Kronenethern und Kryptanden eingesetzt wird.

7. Verfahren nach einem der vorhergehenden Ansprüche,
**dadurch gekennzeichnet, dass**
in Schritt B) in der Abfolge der Schritte i) bis iv)
i) der Produktstrom aus A) filtriert oder zentrifugiert,
ii) Leichtsieder destillativ abgetrennt,
iii) optional Hochsieder über Dünnschichtverdampfung abgetrennt und
iv) Alkoxysilanoalkylurethan über Destillation aufgereinigt und von ggf. noch anwesenden Lösemittelresten abgetrennt wird.

8. Verfahren nach Anspruch 7,
**dadurch gekennzeichnet, dass**
ein Rückstand der Dünnschichtverdampfung B) iii) in die Urethansynthese A) oder in den Filtrations-/Zentrifugationsschritt B) i) zurückgeführt wird.

9. Verfahren nach einem der vorhergehenden Ansprüche,
**dadurch gekennzeichnet, dass**
die thermische Spaltung C) lösemittelfrei und in Gegenwart eine Katalysators bei einer Temperatur von 150 - 280 °C und einem Druck von 0,5 - 200 mbar (0,05 -20 kPa) durchgeführt wird.

10. Verfahren nach Anspruch 9,
**dadurch gekennzeichnet, dass**
die Katalysatorkonzentration 0,5 - 100 ppm beträgt.

11. Verfahren nach einem der vorhergehenden Ansprüche,
**dadurch gekennzeichnet, dass**
in Schritt C) eine Menge an Sumpfmaterial entsprechend 1 - 90 Gew.-% bezogen auf den Feed, aus dem Sumpf ausgeschleust und in Schritt A), B) oder C) wieder zugegeben wird.

12. Verfahren nach Anspruch 2 oder 11,
**dadurch gekennzeichnet, dass**
das ausgeschleuste Sumpfmaterial
- bei einer Temperatur von 150 - 250 °C über einen Zeitraum von 0,2 bis 4 h thermisch behandelt und/oder
- bei vermindertem Druck und einer Temperatur von 150 - 250 °C destilliert und/oder
- in Gegenwart eines Alkohols der Formel R²OH mit R² = linearer, verzweigter oder cyclischer Kohlenwasserstoffrest mit 1 - 6 C-Atomen bei 25- 100 °C in Gegenwart oder Abwesenheit eines Katalysators umgesetzt wird.

13. Verfahren nach Anspruch 12,
**dadurch gekennzeichnet, dass**
keine Umsetzung mit Alkohol durchgeführt wird.

14. Verfahren nach Anspruch 13,
**dadurch gekennzeichnet, dass**
das erhaltene Destillat Schritt B) oder C) zugeführt wird.

15. Verfahren nach einem der vorhergehenden Ansprüche,
**dadurch gekennzeichnet, dass**
die Trennung in Schritt D) eine Rektifikation ist.

## Claims

1. Process for preparing isocyanate containing alkoxysilane groups, in which, in the sequence of steps A) to D),
A) haloalkylalkoxysilane is reacted with metal cyanate and alcohol to give alkoxysilanoalkylurethane,
B) alkoxysilanoalkylurethane is freed of low boilers, solids, salt burdens and/or high boilers and optionally purified,
C) alkoxysilanoalkylurethane obtained after B) is thermally cleaved to release isocyanate containing alkoxysilane groups and by-product, leaving bottoms material, and
D) isocyanate containing alkoxysilane groups and by-product are separated from one another and from the cleavage bottoms material and collected,
**characterized in that**
the process regime at least of steps C) to D) is continuous.

2. Process according to Claim 1, in which, in step C), purified alkoxysilanoalkylurethane obtained after B) is thermally cleaved to release isocyanate containing alkoxysilane groups and by-product, leaving bottoms material, while
i) the bottoms material is being wholly or partly discharged from the cleavage apparatus,
ii) subjected to thermal treatment and/or purification and/or an aftertreatment in the presence of alcohol and
iii) the material removed, after thermal treatment and/or purification and/or aftertreatment in A), B) or C), is fed back.

3. Process according to either of the preceding claims,
**characterized in that**
the haloalkylalkoxysilane has the formula (1)
R³ₘ (OR²) ₃₋ₘSi-R¹-X (1)
where
- R³, R² and R¹ are each independently a linear, branched or cyclic hydrocarbyl radical having 1-6 carbon atoms,
- m is 0-2 and
- X = F, Cl, Br or I.

4. Process according to any of the preceding claims,
**characterized in that**
the metal cyanate used is an alkali metal or alkaline earth metal cyanate.

5. Process according to any of the preceding claims,
**characterized in that**
the reaction is conducted in the presence of an aprotic solvent.

6. Process according to any of the preceding claims,
**characterized in that**
a catalyst selected from crown ethers and cryptands is used.

7. Process according to any of the preceding claims,
**characterized in that**
in step B), in the sequence of steps i) to iv),
i) the product stream A) is filtered or centrifuged,
ii) low boilers are removed by distillation,
iii) high boilers are optionally removed via thin-film evaporation and
iv) alkoxysilanoalkylurethane is purified by distillation and any solvent residues still present are removed.

8. Process according to Claim 7,
**characterized in that**
a residue from the thin-film evaporation B) iii) is recycled into the urethane synthesis A) or into the filtration/centrifugation step B) i).

9. Process according to any of the preceding claims,
**characterized in that**
the thermal cleavage C) is conducted without solvent and in the presence of a catalyst at a temperature of 150-280°C and a pressure of 0.5-200 mbar (0.05-20 kPa) .

10. Process according to Claim 9,
**characterized in that**
the catalyst concentration is 0.5-100 ppm.

11. Process according to any of the preceding claims,
**characterized in that**,
in step C), an amount of bottoms material corresponding to 1-90% by weight based on the feed is discharged from the bottom and added again in step A), B) or C).

12. Process according to Claim 2 or 11,
**characterized in that**
the discharged bottoms material
- is subjected to thermal treatment at a temperature of 150-250°C over a period of 0.2 to 4 h and/or
- is distilled under reduced pressure and at a temperature of 150-250°C and/or
- is converted in the presence of an alcohol of the formula R²OH with R² = linear, branched or cyclic hydrocarbyl radical having 1-6 carbon atoms at 25-100°C in the presence or absence of a catalyst.

13. Process according to Claim 12,
**characterized in that**
no reaction with alcohol is conducted.

14. Process according to Claim 13,
**characterized in that**
the distillate obtained is sent to step B) or C).

15. Process according to any of the preceding claims,
**characterized in that**
the separation in step D) is a rectification.

## Revendications

1. Procédé de fabrication d'un isocyanate contenant des groupes alcoxysilane, selon lequel dans la succession des étapes A) à D)
A) un haloalkylalcoxysilane est mis en réaction avec un cyanate de métal et un alcool pour former un alcoxysilanoalkyluréthane,
B) l'alcoxysilanoalkyluréthane est débarrassé des composants de point d'ébullition faible, des solides, de la charge saline et/ou des composants de point d'ébullition élevé et éventuellement purifié,
C) l'alcoxysilanoalkyluréthane obtenu selon B) est clivé thermiquement pour libérer un isocyanate contenant des groupes alcoxysilane et un produit secondaire et laisser un matériau de fond, et
D) l'isocyanate contenant des groupes alcoxysilane et le produit secondaire sont séparés l'un de l'autre et du matériau de fond clivé et collectés,
**caractérisé en ce que**
la réalisation du procédé d'au moins les étapes C) à D) a lieu en continu.

2. Procédé selon la revendication 1, dans lequel, dans l'étape
C) l'alcoxysilanoalkyluréthane purifié obtenu selon
B) est clivé thermiquement pour libérer un isocyanate contenant des groupes alcoxysilane et un produit secondaire et laisser un matériau de fond, pendant que
i) le matériau de fond est évacué en totalité ou en partie de l'appareil de clivage,
ii) traité thermiquement et/ou purifié et/ou soumis à un traitement secondaire en présence d'un alcool, et
iii) le matériau soutiré est réintroduit après un traitement thermique et/ou une purification et/ou un traitement secondaire dans A), B) ou C).

3. Procédé selon l'une quelconque des revendications précédentes, **caractérisé en ce que** l'haloalkylalcoxysilane présente la formule (1) :
R³ₘ(OR²) ₃₋ₘSi-R¹-X (1)
dans laquelle
- R³, R² et R¹ sont chacun indépendamment les uns des autres un radical hydrocarboné linéaire, ramifié ou cyclique de 1 à 6 atomes C,
- m vaut 0 à 2, et
- X = F, Cl, Br ou I.

4. Procédé selon l'une quelconque des revendications précédentes, **caractérisé en ce que** le cyanate de métal utilisé est un cyanate alcalin ou alcalino-terreux.

5. Procédé selon l'une quelconque des revendications précédentes, **caractérisé en ce que** la réaction est réalisée en présence d'un solvant aprotique.

6. Procédé selon l'une quelconque des revendications précédentes, **caractérisé en ce qu'**un catalyseur choisi parmi les éthers couronnes et les cryptands est utilisé.

7. Procédé selon l'une quelconque des revendications précédentes, **caractérisé en ce qu'**à l'étape B), dans la succession des étapes i) à iv),
i) le courant de produit issu de A) est filtré ou centrifugé,
ii) des composants de point d'ébullition faible sont séparés par distillation,
iii) des composants de point d'ébullition élevé sont éventuellement séparés par évaporation en couche mince, et
iv) l'alcoxysilanoalkyluréthane est purifié par distillation et séparé des restes de solvant éventuellement encore présents.

8. Procédé selon la revendication 7, **caractérisé en ce qu'**un résidu de l'évaporation en couche mince B) iii) est recyclé dans la synthèse d'uréthane A) ou dans l'étape de filtration/centrifugation B) i).

9. Procédé selon l'une quelconque des revendications précédentes, **caractérisé en ce que** le clivage thermique C) est réalisé sans solvant et en présence d'un catalyseur à une température de 150 à 280 °C et une pression de 0,5 à 200 mbar (0,05 à 20 kPa).

10. Procédé selon la revendication 9, **caractérisé en ce que** la concentration du catalyseur est de 0,5 à 100 ppm.

11. Procédé selon l'une quelconque des revendications précédentes, **caractérisé en ce qu'**à l'étape C), une quantité de matériau de fond correspondant à 1 à 90 % en poids par rapport à l'alimentation est évacuée à partir du fond et réintroduite dans l'étape A), B) ou C) .

12. Procédé selon la revendication 2 ou 11, **caractérisé en ce que** le matériau de fond évacué
- est traité thermiquement à une température de 150 à 250 °C pendant une durée de 0,2 à 4 h et/ou
- est distillé à pression réduite et à une température de 150 à 250 °C et/ou
- est mis en réaction en présence d'un alcool de la formule R²OH avec R² = radical hydrocarboné linéaire, ramifié ou cyclique de 1 à 6 atomes C à 25 à 100 °C en présence ou en l'absence d'un catalyseur.

13. Procédé selon la revendication 12, **caractérisé en ce qu'**aucune réaction avec un alcool n'est réalisée.

14. Procédé selon la revendication 13, **caractérisé en ce que** le distillat obtenu est introduit dans l'étape B) ou C).

15. Procédé selon l'une quelconque des revendications précédentes, **caractérisé en ce que** la séparation à l'étape D) est une rectification.
